# EUROPÄISCHE PATENTSCHRIFT

(11) **EP 0 666 785 B1**
(45) Veröffentlichungstag und Bekanntmachung des Hinweises auf die Patenterteilung: **28.05.1997**
(21) Anmeldenummer: 93919027.8
(22) Anmeldetag: 20.09.1993
(51) Int. Cl.: B23B 27/04

(54) **SPANABHEBENDES WERKZEUG, INSBESONDERE STECHEINSATZ**
METAL REMOVING TOOL, IN PARTICULAR LANCING INSERT
OUTIL D'USINAGE PAR ENLEVEMENT DE COPEAUX NOTAMMENT PLAQUETTE DE SOYAGE

(30) Priorität: 28.10.1992 DE 4236370
(43) Veröffentlichungstag der Anmeldung: 16.08.1995
(73) Patentinhaber: Widia GmbH, 45145 Essen (DE)
(72) Erfinder: VON HAAS, Rainer, D-21502 Geesthacht (DE); JESTER, Willi, D-45701 Herten (DE)
(74) Vertreter: Vomberg, Friedhelm, Dipl.-Phys.
(86) Internationale Anmeldenummer: DE9300900
(87) Internationale Veröffentlichungsnummer: WO9409933

(56) Entgegenhaltungen:
- WO-A-89/10224
- DE-A- 2 411 759
- DE-A- 3 906 822

## Beschreibung

Die Erfindung betrifft ein spanabhebendes Werkzeug nach dem Oberbegriff des Anspruches 1.

Aus der WO 89/10224 ist ein derartiges Stechwerkzeug mit einem eine schlitzförmige Ausnehmung aufweisenden Halter und einem Schneideinsatz bekannt, der unter Vorspannung mittels eines als eine Seite der Ausnehmung elastisch abspreizbar ausgebildeten Klemmarmes lösbar gehaltert ist. Die untere Auflagefläche des Schneideinsatzes und die im Klemmzustand gegenüberliegende Fläche des Halters sind im Querschnitt jeweils V-förmig gestaltet. Der Schneideinsatz weist an seiner dem Klemmarm zugewandten Einschub- und Anlagefläche eine Mehrzahl von im wesentlichen ebenen in Einschubrichtung hintereinander angeordneten Teilflächen auf, wovon zwei Flächen in einem stumpfen Winkel zueinander stehen und einen Knickpunkt an der Dachkante derart bilden, daß der Klemmarm im Klemmzustand auf dem Schneideinsatz zwischen der Dachkante und der Schneidkante angreift. Die betreffende Angriffsfläche ist gegenüber der Auflagefläche unter einem Winkel geneigt, so daß die betreffenden Flächenabschnitte zu schneidkantenfernen Bereichen divergieren.

Bereits in der DE-OS 22 06 654 wird ein Stechhalter beschrieben, der einen elastisch biegbaren Klemmarm besitzt, dessen freies Ende den Schneideinsatz unter Wirkung seiner Biegespannung gegen den Halter preßt.

Um die Klemmkraft besser einstellen zu können und ein Herausdrücken des Schneideinsatzes aus der schlitzförmigen Ausnehmung zu verhindern, wird in der EP 0 095 062 B2 ein Stechwerkzeug vorgeschlagen, bei dem der Schneideinsatz und der obere Klemmbacken mit einem Einschubbegrenzungsanschlag versehen sind, der Art, daß der Schnittdruck zu einer proportionalen Erhöhung der Klemmspannung führt, wobei der Klemmschlitz eine rückseitig vom Anschlag ausgehende Ausnehmung aufweist, die sich von der Längsrichtung des Klemmschlitzes abweichend im oberen Klemmbacken erstreckt, so daß zu dessen Aufspreizbarkeit eine sichtbar schmal ausgeprägte, als Gelenkstelle wirkende Brücke gebildet wird. Die Klemmfläche des oberen Klemmbackens steigt gegenüber der Klemmfläche des Schneideinsatzes leicht nach innen an, so daß insgesamt eine wesentliche, den Schneideinsatz in die Klemmbacken einklemmende Hebelwirkung entstehen soll.

Die DE 39 06 822 A1 beschreibt eine Weiterentwicklung der vorbeschriebenen Ausführungsform, nach der der Klemmschlitz im hinteren Bereich einen ovalen Schlitzbereich aufweist, in dem ein Aufspreizschlüssel mit elliptischem Querschnittsprofil einsteckbar und verdrehbar ist, wodurch der Klemmarm abgespreizt und der Steck- oder Schneideinsatz entlastet wird.

Das Schneidwerkzeug nach der EP 0 152 729 B1 weist einen Schneideinsatz mit einer Kantenoberfläche auf, die gegenüber der Auflagefläche eine Mehrzahl von gegenseitig geneigten Teilen aufweist, die dazu bestimmt sind, während des Einsetzens des Schneideinsatzes als Gleitflächen zu dienen, wobei der Beginn der Endphase des Einsetzens durch einen Knick- oder Haltepunkt zwischen zwei unter einem stumpfen Winkel geneigten Teilen der Kantenoberfläche definiert ist. Die Fläche der Klemmberührung liegt in der Endposition zwischen dem Klemmarm und der Kantenoberfläche zwischen dem Knick- und Haltepunkt und der Schneidkante des Schneideinsatzes. Der Schneideinsatz ist an den zusammenwirkenden Oberflächen ebenso wie die korrespondierenden Flächen des Halters V-förmig ausgestaltet. Die beiden einen Knick- und Haltepunkt bzw. eine Dachkante bildenden Teilflächen sind derart angeordnet, daß die Klemmfläche etwa parallel der Auflagefläche des Schneideinsatzes liegt und die hieran angrenzende Fläche unter einem positiven Winkel zwischen 2° und 5° geneigt ist.

Eine entsprechende Ausgestaltung mit einer Anschlag-Nase für eine Stirnseite des Klemmarmes zeigt die EP 0 242 343. Die an die Anschlagnase angrenzende Spannfläche des Schneideinsatzes liegt parallel zu deren Auflagefläche. An die genannte Spannfläche schließt sich unter positivem Winkel eine ebene Fläche an. Im Querschnitt sind auch hier die jeweiligen Anlageflächen des Schneideinsatzes und der schlitzförmigen Ausnehmung V-förmig.

Es ist Aufgabe der vorliegenden Erfindung, das eingangs genannte spanabhebende Werkzeug derart weiterzubilden, daß der Schneideinsatz in dem Halter gegen ein Herausziehen gesichert ist, insbesondere, wenn das Werkzeug aus einer Nut zurückgefahren wird, und daß der Schneideinsatz eine bessere Stabilisierung erhält.

Diese Aufgabe wird durch die Merkmalskombination nach Anspruch 1 gelöst. Die Neigung der Teilfläche, an der der Klemmarm angreift, unter einem negativen Winkel gegenüber der Auflagefläche oder der durch die Auflagelinien des Schneideinsatzes definierten Ebene ist im Prinzip nach dem Stand der Technik bekannt und führt dazu, daß der Schneideinsatz auch bei Zugbeanspruchungen nicht aus der Klemmlage herausgezogen oder unbeabsichtigt verschoben werden kann. Je nach Neigungswinkel, der vorzugsweise zwischen 2° und 30° liegt, bestimmt sich die nach hinten, d.h. in Einschubrichtung wirkende durch die Klemmkraft bestimmte Komponente, wobei der größere Teil der Klemmkraft den Schneideinsatz in die Auflage im Halter preßt. Vorteilhafterweise kann diese Ausführungsform mit allen nach dem Stand der Technik bekannten Gestaltungsmerkmalen kombiniert werden, bei denen rückwärtige Anschläge in der Halterausnehmung vorgesehen sind, um ein Verschieben des Schneideinsatzes bei der Zerspanoperation nach hinten zu verhindern. Eine seitliche Verschiebung der Schneideinsätze wird durch die im Querschnitt jeweils V-förmigen Flächen am Schneideinsatz und Halter wirksam verhindert. Der weitere Angriffspunkt oder die weitere Angriffslinie oder -fläche dient der weiteren Stabilisierung des Schneideinsatzes.

Weiterbildungen der Erfindung sind in den Unteransprüchen beschrieben.

So liegt der Klemmarm am Schneideinsatz vorzugsweise zwischen der Dachkante und der Schneidkante punkt- oder linienförmig an (wobei die Anlagelinie quer zur Einschubrichtung steht). Diese punkt- oder linienförmige Anlage sichert - auch bei etwaigen Oberflächenbearbeitungsungenauigkeiten am Schneideinsatz und der Halterausnehmung - eine stabile Arretierung.

Nach einer weiteren Ausgestaltung besitzt der Klemmarm eine im vorderen Bereich ebene Anlagefläche, die im Klemmzustand gegenüber der entsprechenden gegenüberliegenden Teilfläche des Schneideinsatzes leicht nach innen ansteigt. Der betreffende Anstiegswinkel zwischen der Anlagefläche des Klemmarmes und der im Klemmzustand ihr gegenüberliegenden Teilfläche liegt zwischen 1° und 10°, vorzugsweise 1° bis 5°.

Die untere Auflagefläche des Schneideinsatzes und der entsprechende Aufnahmesitz im Halter kann zur weiteren Erhöhung der Stabilität als Hohlboden konkav gewölbt sein.

Die vorbeschriebene Ausführungsform bietet in Verbindung mit der Hohlbodenausgestaltung eine Mehrpunktanlage im Bereich des Aufnahmesitzes bzw. des Schneideinsatzbodens gegenüber einer einseitigen Punkt- oder Linienpressung in der Schneideinsatzoberfläche.

Hierbei wird bevorzugt eine Ausführungsform des Schneideinsatzes mit drei in Einschubrichtung gesehen hintereinanderliegenden, im Querschnitt V-förmig ausgebildeten Teilflächen bevorzugt, von denen die letzte, von der Schneidkante weitestentfernt liegende parallel zu der unteren Auflagefläche des Schneideinsatzes liegt. Sofern die Auflagefläche hohl ausgestaltet ist, ist in
entsprechender Weise die durch die Auflagelinien definierte Ebene zu verstehen. Die mittlere Teilfläche wird vorzugsweise unter einem positiven Winkel von 5° bis 70° gegen die untere Auflagefläche geneigt ausgebildet, was sich beim Einschieben des Schneideinsatzes in die schlitzförmige Ausnehmung derart auswirkt, daß die geneigte zweite Fläche gegenüber der Vorderseite des Klemmarmes eine Art Rampe darstellt, weshalb beim Eintreiben des Schneideinsatzes der Klemmarm abgespreizt wird, um nach Passieren der Dachkante den Klemmeinsatz nach hinten in die Aufnahme zu ziehen. Die hintere letzte Anlagefläche, an der ggf. der Klemmarm zusätzlich weiterhin angreift, ist entweder parallel zur Schneideinsatzunterseite bzw. dem Sitz im Halter oder unter einem positiven Winkel von 1° bis 10°, vorzugsweise 1° bis 5°, gegen die Auflagefläche des Schneideinsatzes geneigt. Bei einer geneigt ausgeführten Form ist somit der Übergang von der ersten Teilfläche zur zweiten Teilfläche als Dach und der Übergang von der zweiten Teilfläche zur dritten Teilfläche als Senke ausgebildet. Die zweite und dritte Teilfläche können jedoch auch als eine einzige Fläche ausgebildet sein. Die Teilflächen sind in der Regel eben ausgestaltet, können jedoch auch leicht konkav bzw. konvex gewölbt sein. Preßt der Klemmarm sowohl im vorderen Bereich als auch im hinteren Bereich den Schneideinsatz in den Schneideinsatzsitz, so besitzt der Klemmarm vorzugsweise zwischen der vorderen Teilfläche und der hinteren Anlagefläche eine Ausnehmung, die in einer bevorzugten Ausführungsform rund ist. Mit dieser Ausnehmung wird die zweite Teilfläche des Schneideinsatzes einschließlich der Dachkante "überbrückt".

Bildet man den Schneideinsatz in der Höhe größer aus als die unbelastete schlitzförmige Ausnehmung, so ergibt sich im Klemmzustand des Schneideinsatzes eine Vorspannung.

Nach einer weiteren Ausgestaltung besitzt der Schneideinsatz im an die Schneidkante angrenzenden Bereich einen Anschlag, der die Endposition des Schneideinsatzes im Halter durch Anlage gegen eine Stirnfläche des Halterklemmarmes bestimmt.

Als bevorzugte Anordnung eines Kühlmittelkanals bietet sich der Klemmarm selbst an.

Um den Schneideinsatz leicht aus der Klemmung zum Wechsel oder nach Beendigung des Arbeitsvorganges lösen zu können, besitzt die schlitzförmige Ausnehmung in einem an den für die Aufnahme des Schneideinsatzes angrenzenden Bereich eine konturierte Ausnehmung, in die ein Steckschlüssel mit im Querschnitt größerer Länge als Breite einsteckbar und bei Drehung desselben die schlitzförmige Ausnehmung im Bereich der Schneideinsatzaufnahme aufspreizbar ist. Vorzugsweise sind die konturierte Ausnehmung und der Steckschlüssel im Querschnitt oval oder elliptisch ausgebildet, was das Drehen des Steckschlüssels erleichtert.

Nach einer weiteren Ausgestaltung der Erfindung kann die Vorspannung des Klemmarmes über eine Klemmschraube einstellbar sein, eine Ausführungsform, die sich insbesondere für das Längsdrehen anbietet.

Weitere Ausführungsformen der Erfindung sind in den Zeichnungen dargestellt. Es zeigen
- Fig. 1 und 2: jeweils Seitenansichten von Stechwerkzeugen,
- Fig. 3: einen Schnitt entlang der Linie III - III nach Fig. 2,
- Fig. 4: eine Detailvergrößerung des Einsatzes nach Fig. 1 oder 2,
- Fig. 5: einen Schneideinsatz in einer Seitansicht,
- Fig. 6: eine Stirnansicht des Schneideinsatzes nach Fig. 5,
- Fig. 7: einen Steckschlüssel in einer Seitenansicht,
- Fig. 7a: eine Schnittansicht entsprechend der Linie VII - VII in Fig. 7,
- Fig. 8: das Einführen des Schneideinsatzes nach Fig. 5 in einen Stechhalter,
- Fig. 9: einen weiteren Stecheinsatz und
- Fig. 10: den dazugehörigen Stechhalter,
- Fig. 11: einen Stechhalter mit Klemmschraube und

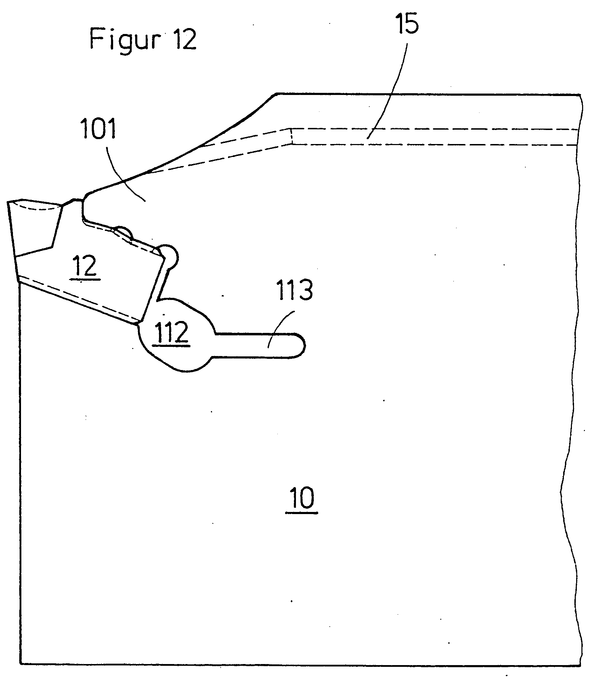

- Fig. 12: einen Stechhalter mit Kühlmittelzuführung im Klemmarm.

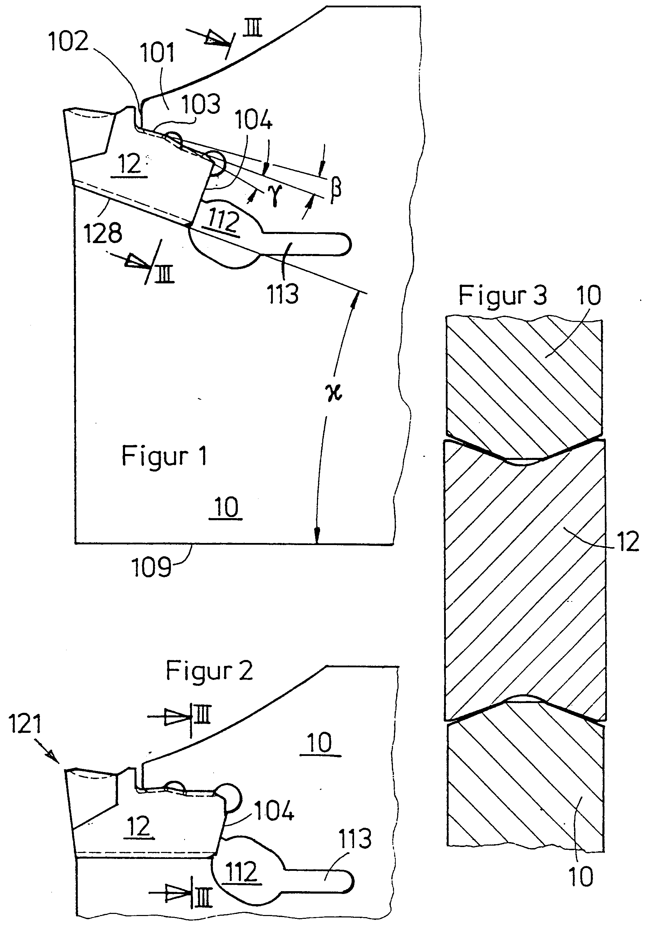

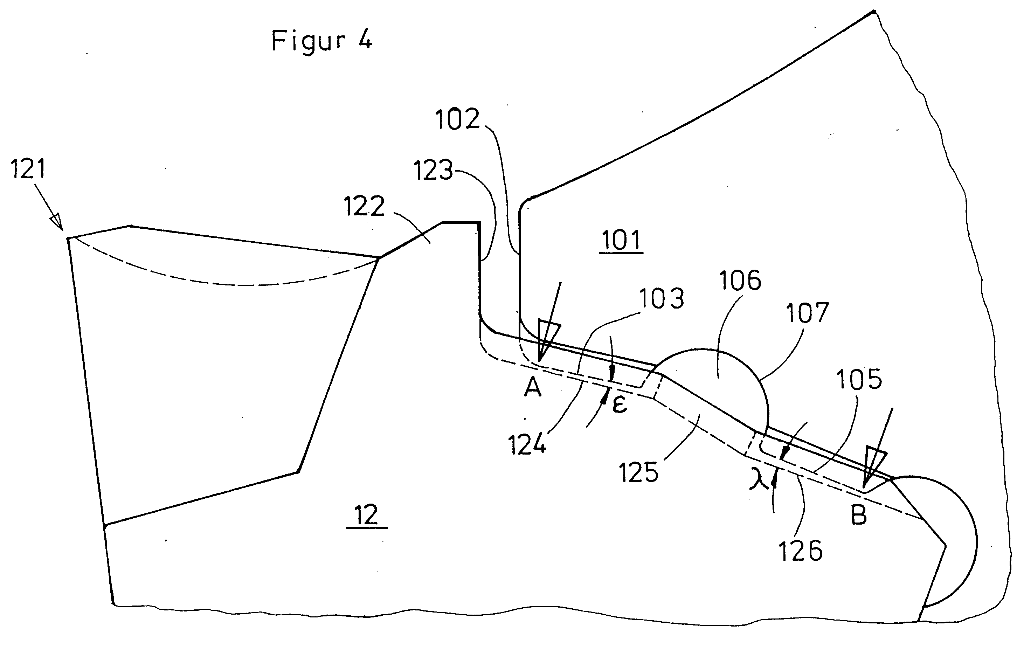

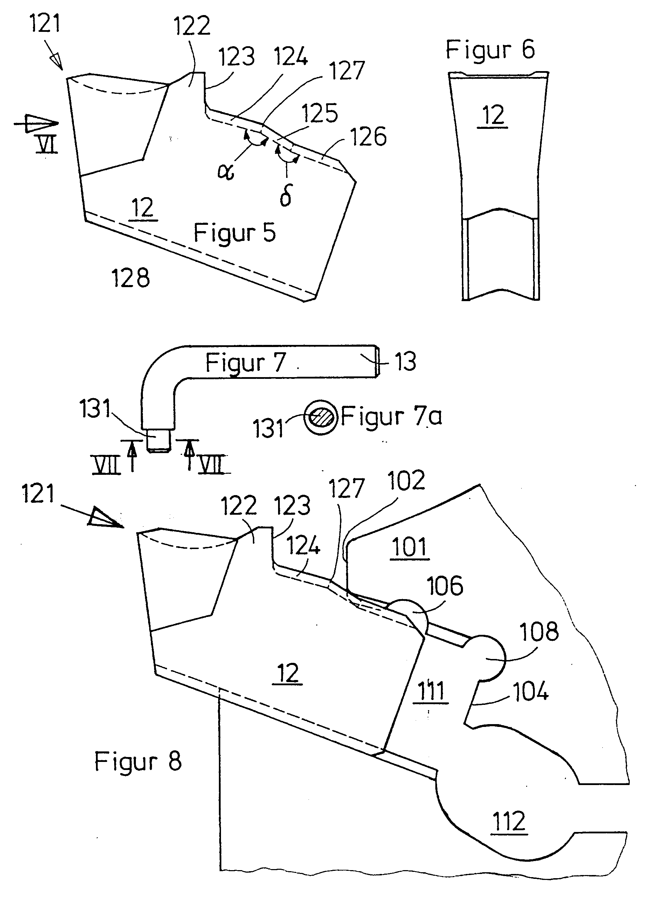

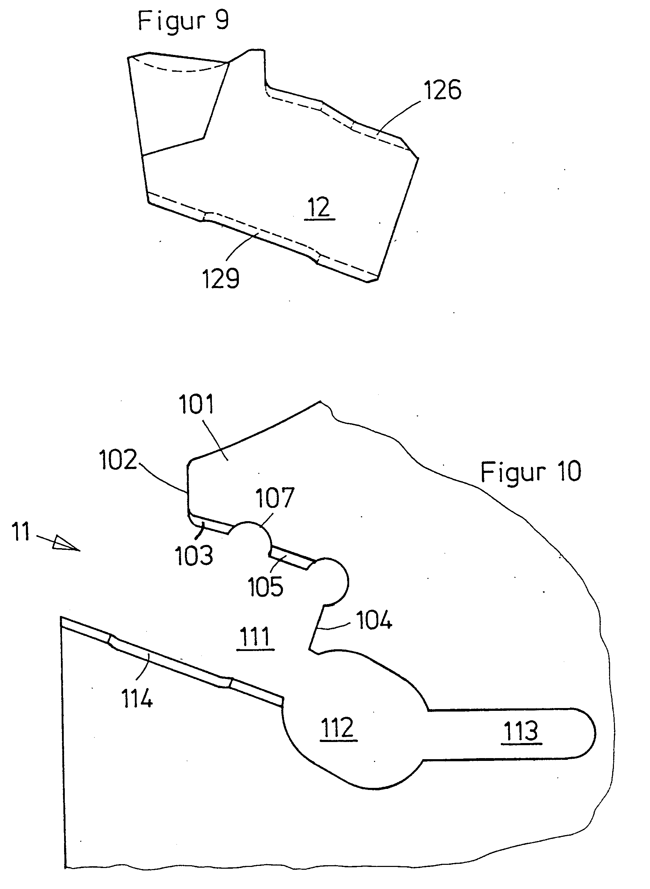

Der jeweils dargestellte Halter 10 besitzt eine schlitzförmige Ausnehmung 11 (siehe insbesondere Fig. 10), deren erster Teil 111 den Außenkonturen des Schneideinsatzes 12 angepaßt ist. In der weiteren Verlängerung der Ausnehmung 11 ist ein länglich-ovaler bis elliptischer Hohlraum 112 vorgesehen, in den ein Einsteckschlüssel 13 (vgl. Fig. 7) mit seinem Einsteckende 131 einsteckbar ist, wobei um 90°-Drehung der Klemmarm 101 unter Aufspreizung des Schlitzes 11 bewegt wird. Die sich an die ovale Ausnehmung 112 anschließende weitere Verlängerung 113 des Schlitzes bestimmt im wesentlichen die Länge des Klemmarmes 101 und hierüber auch das Maß der durch den Klemmarm aufbringbaren Vorspannung. Der Schneideinsatz 12 besitzt an seinem vorderen Ende eine Schneidkante 121 sowie im Prinzip nach dem Stand der Technik bekannte Spanflächengeometrien, die, wie im vorliegenden Fall anhand der Schneideinsätze dargestellt, in einen nasenförmigen Teil 122 des Schneideinsatzes übergehen können, dessen rückwärtige Fläche 123 gleichzeitig Anschlagfläche für die vordere Stirnseite 102 des Klemmarmes 101 ist. Wie die Querschnittsansicht entsprechend Fig. 3 zeigt, ist der Schneideinsatz im oberen wie im unteren Bereich jeweils V-förmig ausgebildet, wobei im vorliegenden Fall der Schneidkörper 12 eine konkave Ober- und Unterseite aufweist, wohingegen die entsprechend ausgebildete konvexe Form vom Halter 10 dargestellt wird. Wesentliche Neuerung des Schneideinsatzes ist die Ausgestaltung der Schneideinsatzoberseite im rückwärtigen Anschluß an die Nase 122. Der Schneideinsatz besitzt hieran anschließend drei Teilfächen 124, 125 und 126, wovon die ersten beiden Teilfächen 124 und 125 einen stumpfen Winkel α miteinander bilden, und zwar dergestalt, daß ein Knick- oder Dachkantenpunkt 127 entsteht. Der Winkel δ zwischen den Teilflächen 125 und 126 ist gleich oder größer als 180°, d.h., diese Teilflächen bilden eine Rinne oder eine durchgehende ebene Fläche miteinander. Die Teilfläche 126 kann parallel zur unteren Auflagefläche 128 des Schneideinsatzes oder hierzu unter einem spitzen positiven Winkel verlaufen. Die Teilfläche 124, die an die Nase 122 unmittelbar angrenzt ist unter einem negativen Winkel β gegenüber der Auflagefläche oder der durch die Auflagelinien des Schneideinsatzes definierten Ebene geneigt. Dieser Neigungswinkel β liegt zwischen 2° und 10°, im vorliegenden Fall bei etwa 5°. Die Fläche 125 ist unter einem positiven Winkel gegenüber der unteren Auflagefläche 128 geneigt, wobei dieser Winkel zwischen 5° und 70° liegen kann, im vorliegenden Fall bei etwa 12° Der Klemmarm besitzt mindestens eine vordere Anlagefläche 103, die wenn nicht vollflächig an der Teilfläche 124 anliegend so unter einem Winkel ε (siehe Fig. 4) klemmend anliegt. Durch diesen Winkel ε wird eine punkt- bzw. linienförmige Berührung im Bereich des mit A gekennzeichneten Anlagepunktes geschaffen. Durch die Winkelneigung β erfährt der Schneideinsatz 12 auch eine rückwärts wirkende Spannkraftkomponente, die verhindert, daß beim Herausziehen des Stechwerkzeuges aus der gefertigten Nut oder beim Kopier- bzw. Formdrehen mit rückwärts wirkende Schnittkräften der Schneideinsatz aus dem Halter gezogen wird. Die an die erste Teilfläche 124 anschließende Teilfläche 125 unterstützt beim Eintreiben des Schneideinsatzes (siehe Fig. 8) in die Ausnehmung 11 das Aufspreizen des Klemmarmes 101 bis zum Erreichen des Knickpunktes 127, wo die Aufspreizung ein Maximum erreicht. Ein weiteres Einführen des Schneideinsatzes 12 in die schlitzförmige Ausnehmung 11 wird durch die Neigung der Teilfläche 124 in Verbindung mit der Druckspannung des Klemmarmes 101 unterstützt. Der Schneideinsatz kann nur soweit in die schlitzförmige Ausnehmung 11 eingetrieben werden, bis die Stirnfläche 102 des Klemmarmes an die entsprechende Anschlagfläche 123 der Nase 122 anstößt. Gleichzeitig oder alternativ hierzu kann auch ein Anschlag 104 als rückwärtige Begrenzung des Hohlraumes 111 am Klemmarm 101 vorgesehen sein.

Der Klemmarm 101 kann jedoch noch eine zweite Klemmanlage im Bereich B (siehe Fig. 4) besitzen, wenn der Klemmarm eine mit der Teilfläche 126 korrespondierende weitere Fläche 105 aufweist, die ebenfalls leicht gegenüber der Teilfläche 126 um den Winkel λ mit einem Winkelwert von 1° bis 10°, vorzugsweise 1° bis 5°, geneigt ist, so daß sich auch hier im Bereich B eine punkt- oder linienförmige Berührung im rückwärtigen Teil des Schneideinsatzes ergibt. Um die Teilfläche 125 zu überbrücken, besitzt der Klemmarm 101 zwischen diesen eine Aussparung 106, die ein Halbkreisprofil 107 besitzt. Der Klemmarm 101 verbiegt sich im Klemmzustand. Durch optimale Ausbildung der Größe der Aussparung 106 kann erreicht werden, daß die Spannkräfte in den Klemmbereichen A und B sich so einstellen, daß sich bei der jeweiligen Bearbeitungsaufgabe ein Minimum an Auslenkung an der Schneidkante ergibt. Auch im Anschluß an die zweite Klemmfläche 105 kann eine weitere Aussparung 108, begrenzt mit einem kreisförmigen Profil vorgesehen sein. Der Schneideinsatz 12 kann entweder mit einem Schlagwerkzeug, wie einem Gummihammer, in die schlitzförmige Ausnehmung 11 eingetrieben werden oder nachdem mittels des Steckschlüssels 13 und einer 90°-Drehung dieses Schlüssels eine entsprechende Aufspreizung des Schlitzes vorgenommen worden ist. Entsprechend kann der Schneideinsatz auch nach Aufweitung des Schlitzes 11 mittels des Spannschlüssels 13 entnommen werden.

Der Schneideinsatz kann an seiner Unterseite in einer Seitenansicht geradlinig ausgebildet sein, wie dies beispielsweise in Fig. 1, 2, 5 und 8 dargestellt ist. Alternativ hierzu kann jedoch der Schneideinsatz im V-förmigen Prisma an der Unterseite auch ein Hohlbodenprofil 129 besitzen, entsprechendes gilt für Ausnehmungen 114 des Halters 10 im vorderen Aufnahmebereich des Schlitzes 11.

Gleichfalls ist es, wie in Fig. 1 angedeutet, möglich, die Auflagefläche 128 unter einem Winkel χ gegenüber der Halterunterseite 109 oder parallel hierzu anzuordnen.

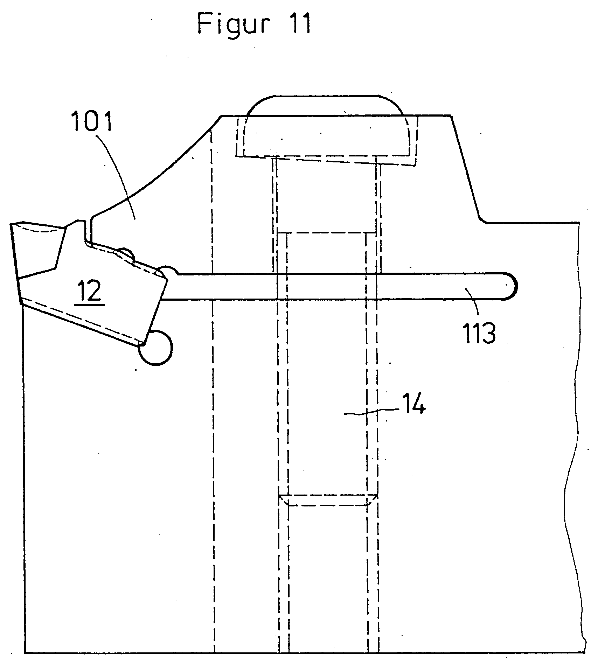

Nach der in Fig. 11 dargestellten Ausführungsform, die sich insbesondere zum Längsdrehen eignet, wird der Klemmarm 101 durch eine Schraube 14 gespannt.

Wird, wie beispielsweise bei Stechdrehoperationen, ein Kühlschmiermittel benötigt, kann der Klemmarm 101 zusätzlich eine Kühlmittelzuführleitung 15 aufweisen.

## Patentansprüche

1. Spanabhebendes Werkzeug, insbesondere Stecheinsatz, mit einem eine schlitzförmige Ausnehmung (11) aufweisenden Halter (10) und einen Schneideinsatz (12), der hierin unter Vorspannung mittels eines als eine Seite der Ausnehmung (11) elastisch abspreizbar ausgebildeten Klemmarmes (101) lösbar gehaltert ist, wobei der Schneideinsatz (12) und die schlitzförmige Ausnehmung (11) an ihren gegenseitigen zusammenwirkenden Einschub- und Anlageflächen im Querschnitt jeweils V-förmig gestaltet sind und der Schneideinsatz eine untere Auflagefläche (128) und an seiner dem Klemmarm (101) zugewandten Einschub- und Anlagefläche eine Mehrzahl von im wesentlichen ebenen in Einschubrichtung hintereinander angeordnete Teilflächen aufweist, wovon zwei Flächen in einem stumpfen Winkel (α) zueinanderstehen und einen Knickpunkt an der Dachkante (127) derart bilden, daß der Klemmarm (101) im Klemmzustand auf den Schneideinsatz (12) zwischen der Dachkante (127) und der Schneidkante (121) angreift, wobei die Teilfläche (124), an der der Klemmarm (101) angreift, unter einem negativen Winkel (β) gegenüber der unteren Auflagefläche (128) oder der durch die Auflagelinien des Schneideinsatzes (12) definierten Ebene geneigt ist, bei dem die untere Auflagefläche (128) und die Teilfläche (124) zu schneidkantenferneren Bereichen divergieren,
**dadurch gekennzeichnet**,
daß der Klemmarm (101) zusätzlich einen weiteren Angriffspunkt (B) oder eine weitere Angriffslinie oder -fläche an einer von der Schneidkante (121) weitest entfernt liegenden Teilanlagefläche (126) hat.

2. Werkzeug nach Anspruch 1, dadurch gekennzeichnet, daß der negative Winkel (β) zwischen 2° und 30° liegt.

3. Werkzeug nach Anspruch 1 oder 2, dadurch gekennzeichnet, daß der Klemmarm (101) am Schneideinsatz (12) zwischen der Dachkante (127) und der Schneidkante (121) punkt- oder linienförmig anliegt.

4. Werkzeug nach Anspruch 1 bis 3, dadurch gekennzeichnet, daß der Klemmarm (101) im vorderen Bereich (A) ebene Anlageflächen (103) aufweist, die im Klemmzustand gegenüber der entsprechenden gegenüberliegenden Teilflächen (124) des Schneideinsatzes (12) leicht nach innen ansteigt.

5. Werkzeug nach Anspruch 2, dadurch gekennzeichnet, daß der Winkel (ε) zwischen der Anlagefläche (103) des Klemmarmes (101) und der im Klemmzustand ihr gegenüberliegenden Teilfläche (124) zwischen 1° und 10°, vorzugsweise 1° bis 5°, liegt.

6. Werkzeug nach einem der Ansprüche 1 bis 5, dadurch gekennzeichnet, daß die untere Auflagefläche (128) und/oder die korrespondierende Fläche (114) des Halters (10) als Hohlboden konkav gewölbt sind.

7. Werkzeug nach einem der Ansprüche 1 bis 6, dadurch gekennzeichnet, daß der Schneideinsatz (3) in Einschubrichtung gesehen hintereinanderliegende im Querschnitt V-förmig ausgebildete Teilflächen (124, 125, 126) aufweist, von denen die letzte (126) von der Schneidkante (121) weitestentfernt liegende parallel zu der unteren Auflagefläche (128) des Schneideinsatzes liegt.

8. Werkzeug nach Anspruch 7, dadurch gekennzeichnet, daß die mittlere Teilfläche (125) unter einem positiven Winkel von 5° bis 70° gegen die untere Auflagefläche (128) geneigt ist.

9. Werkzeug nach einem der Ansprüche 5 und 6, dadurch gekennzeichnet, daß der Klemmarm (101) eine hintere Anlagefläche (105) aufweist, die unter 0° oder einem positiven Winkel (λ) von 1° bis 10°, vorzugsweise 1° bis 5°, gegen die von der Schneidkante weitest entfernt liegende Teilanlagefläche (126) des Schneideinsatzes (12) geneigt ist.

10. Werkzeug nach einem der Ansprüche 7 bis 9, dadurch gekennzeichnet, daß der Klemmarm (101) zwischen der vorderen Teilfläche (103) und der hinteren Anlagefläche (105) eine Ausnehmung (106) aufweist, die vorzugsweise rund ist.

11. Werkzeug nach einem der Ansprüche 1 bis 10, dadurch gekennzeichnet, daß der Schneideinsatz (12) in der Höhe größer ausgebildet ist als die unbelastete schlitzförmige Ausnehmung (111), so daß im Klemmzustand der Schneideinsatz (12) unter Vorspannung gehaltert wird.

12. Werkzeug nach einem der Ansprüche 1 bis 11, dadurch gekennzeichnet, daß der Schneideinsatz (12) im an die Schneidkante (121) angrenzenden Bereich einen Anschlag (123) aufweist, der die Endposition des Schneideinsatzes (12) im Halter (10) durch Anlage gegen eine Stirnfläche (102) des Halterklemmarmes (101) bestimmt.

13. Werkzeug nach einem der Ansprüche 1 bis 12, gekennzeichnet durch einen Kühlmittelkanal (15) im Klemmarm.

14. Werkzeug nach einem der Ansprüche 1 bis 13, dadurch gekennzeichnet, daß die schlitzförmige Ausnehmung (11) in einem an den für die Aufnahme des Schneideinsatzes (12) angrenzenden Bereich (111) eine konturierte Ausnehmung (112) aufweist, in die ein Steckschlüssel (13) mit im Querschnitt größerer Länge als Breite einsteckbar und bei Drehung desselben die schlitzförmige Ausnehmung (11) im Bereich der Schneideinsatzaufnahme (111) aufspreizbar ist.

15. Werkzeug nach Anspruch 14, dadurch gekennzeichnet, daß die konturierte Ausnehmung (112) und der Steckschlüssel (13) im Querschnitt oval oder elliptisch ausgebildet sind.

16. Werkzeug nach einem der Ansprüche 1 bis 15, dadurch gekennzeichnet, daß die Vorspannung des Klemmarmes (101) über eine Klemmschraube (14) einstellbar ist.

## Claims

1. Metal removing tool, in particular lancing insert with a holder (10) having a slot-shaped recess (11) and a cutting insert (12) detachably held therein under preliminary stress by means of an elastically expandable clamping arm (101) designed as one side of the recess (11), whereby both the cutting insert (12) and the slot-shaped recess (11) have in cross section a V-shaped configuration at their mutually cooperating insertion and bearing surfaces and the cutting insert has a lower contact surface (128) and at its insertion and bearing surface facing the clamping arm (101) a plurality of essentially flat partial surfaces arranged in a sucession in the direction of insertion, two of these surface being at an obtuse angle
(α) to each other and forming a salient point at the ridge (127), so that in the clamped state the clamping arm (101) engages on the cutting insert (12) between the ridge (127) and the cutting edge (121), whereby the partial surface (124), where the clamping arm (101) engages, is inclined at a negative angle (β) with respect to the lower contact surface (128) or to the plane defined by the contact lines of the cutting insert (12), wherein the lower contact surface (128) and the partial surface (124) diverge towards areas remote from the cutting edge, characterized in that additionally the clamping arm (101) has a further contact point (B) or a further contact line or surface at the partial surface (126) which is the furthest from the cutting edge (121).

2. Tool according to claim 1, characterized in that the negative angle (β) ranges between 2° and 30°.

3. Tool according to claim 1 or 2, characterized in that the clamping arm (101) lies against the cutting insert (12) between the ridge (127) and the cutting edge (121) making punctiform or linear contact.

4. Tool according to claim 1 to 3, characterized in that the clamping arm (101) has in its frontal area (A) a flat bearing surface (103) which in the clamped state rises slightly inwardly with respect to the corresponding opposite partial surface (124) of the cutting insert (12).

5. Tool according to claim 2, characterized in that the angle (ε) between the bearing surface (103) of the clamping arm (101) and the partial surface (124) which lies opposite thereto in the clamped state ranges between 1° and 10°, preferably between 1° and 5°.

6. Tool according to one of claim 1 to 5, characterized in that the lower contact surface (128) and/or the corresponding surface (114) of the holder (10) are concavely curved as a hollow bottom.

7. Tool according to one of claims 1 to 6, characterized in that the cutting insert (3) seen in insertion direction has partial surface (124, 125, 126) arranged in succession and having a V-shaped cross section, the last (126) of which and the most remote from the cutting edge (121) is parallel to the lower contact surface (128) of the cutting insert.

8. Tool according to claim 7, characterized in that the middle partial surface (125) is inclined at a positive angle of 5° to 70° with respect to the lower contact surface (128).

9. Tool according to one of claim 5 and 6, characterized in that the clamping arm (101) has a rear bearing surface (105) which is inclined at 0° or at a positive angle (λ) of 1° to 10°, preferably 1° to 5°, with respect to the contact surface (126) of the cutting insert (12), located most remote from the cutting edge.

10. Tool according to one of claims 7 to 9, characterized in that the clamping arm (101) has a recess (106), which is preferably round, between the frontal partial surface (103) and the rear bearing surface (105).

11. Tool according to one of claims 1 to 10, characterized in that the cutting insert (12) is designed to have a bigger height than the slot-shaped recess (111) not under load, so that in the clamped state the cutting insert (12) is held under preliminary stress.

12. Tool according to one of claims 1 to 11, characterized in that the cutting insert (12) has a stopping element (123) in an area adjacent to the cutting edge (121), which determines the end position of the cutting insert (12) in the holder (10) by pressing against a frontal surface (102) of the holder clamping arm (101).

13. Tool accoding to one of claims 1 to 12, characterized by a cooling-medium channel (15) in the clamping arm.

14. Tool according to one of claime 1 to 13, characterized in that the slot-shaped recess (11), in an area (111) adjacent to the seat of the cutting insert (12) has a contoured recess (112), wherein a socket wrench (13) having a cross section whose length exceeds its width, can be inserted and by turning the same the slot-shaped recess (11) can be expanded in the area of the cutting insert (12).

15. Tool according to claim 14, characterized in that the contoured recess (112) and the socket wrench (13) have an oval or ellipsoidal cross section.

16. Tool according to one of claims 1 to 15, characterized in that the preliminary stress of the clamping arm (101) can be set by means of a clamping screw (14).

## Revendications

1. Outil d'usinage par enlèvement de copeaux, en particulier insert à saigner, avec un support (10) présentant un évidement (11) en forme de fente et avec un insert de coupe (12) qui y est maintenu de manière amovible sous précontrainte par le biais d'un bras de serrage (101) qui peut être écarté élastiquement et est réalisé en tant que l'un des côtés de l'évidement (11), aussi bien l'insert de coupe (12) que l'évidement (11) en forme de fente présentant, en coupe transversale, respectivement une configuration en V sur leurs faces d'insertion et d'appui coopérant mutuellement l'une avec l'autre, et l'insert de coupe présentant une face d'appui inférieure (128) et, sur sa face d'insertion et d'appui qui est située en face du bras de serrage (101), une multitude de faces partielles pour l'essentiel planes et disposées l'une derrière l'autre dans la direction d'insertion, dont deux faces étant disposées l'une par rapport à l'autre à un angle obtus (α) et formant un point d'inflexion sur l'arête (127) de telle manière qu'en état de serrage, le bras de serrage (101) saisit l'insert de coupe (12) entre l'arête (127) et le tranchant (121), la face partielle (124) sur laquelle s'applique le bras de serrage (101), étant inclinée sous un angle négatif (β) par rapport à la face d'appui inférieure (128) ou au plan défini par les lignes de contact de l'insert de coupe (12), dans le cas duquel la face d'appui inférieure (128) et la face partielle (124) divergent vers des zones situées plus loin du tranchant,
**caractérisé par le fait**
que le bras de serrage (101) présente en sus un autre point d'attaque (B) ou une autre ligne ou face d'attaque sur une face d'appui partielle (126) la plus éloignée du tranchant (121).

2. Outil selon la revendication 1, caractérisé par le fait que l'angle négatif (β) est compris entre 2° et 30°.

3. Outil selon la revendication 1 ou 2, caractérisé par le fait que le bras de serrage (101) s'appuie contre l'insert de coupe (12) entre l'arête (127) et le tranchant (121) de manière à réaliser un contact pontuel ou linéaire.

4. Outil selon la revendication 1 à 3, caractérisé par le fait que le bras de serrage (101) présente dans la zone avant (A) une face d'appui (103) plane qui, en état de serrage, monte légèrement vers l'intérieur par rapport à la face partielle correspondante opposée (124) de l'insert de coupe (12).

5. Outil selon la revendication 2, caractérisé par le fait que l'angle (ε) formé entre la face d'appui (103) du bras de serrage (101) et la face partielle (124) qui, en état de serrage, se trouve en face de cette première, est compris entre 1° et 10°, de préférence entre 1° et 5°.

6. Outil selon l'une des revendications 1 à 5, caractérisé par le fait que la face d'appui inférieure (128) et/ou la face correspondante (114) du support (10) est courbé de façon concave en tant que fond creux.

7. Outil selon l'une des revendications 1 à 6, caractérisé par le fait que l'insert de coupe (3), vu dans la direction d'insertion, présente des faces partielles (124, 125, 126) disposées l'une derrière l'autre qui, en coupe transversale, ont une forme de V et dont la dernière (126), donc la plus éloignée du tranchant (121) est située parallélement à la face d'appui inférieure (128) de l'insert de coupe.

8. Outil selon la revendication 7, caractérisé par le fait que la face partielle de milieu (125) est inclinée sous un angle positif compris entre 5° et 70° par rapport à la face d'appui inférieure (128).

9. Outil selon l'une des revendications 5 et 6, caractérisé par le fait que le bras de serrage (101) présente une face d'appui arrière (105) qui est inclinée sous 0° ou sous un angle positif (λ) compris entre 1° et 10°, de préférence entre 1° et 5°, par rapport à la face d'appui partielle (126) de l'insert de coupe (12), la plus éloignée du tranchant.

10. Outil selon l'une des revendications 7 à 9, caractérisé par le fait que le bras de serrage (101) présente un évidement (106) qui est de préférence rond, entre la face partielle avant (103) et la face d'appui arrière (105).

11. Outil selon l'une des revendications 1 à 10, caractérisé par le fait que l'insert de coupe (12) présente une hauteur plus importante que l'évidement en forme de fente (111) non chargé, de sorte qu'en état de serrage, l'insert de coupe (12) est maintenu sous précontrainte.

12. Outil selon l'une des revendications 1 à 11, caractérisé par le fait que l'insert de coupe (12) présente une butée (123) dans la zone contiguë au tranchant (121), qui détermine la position terminale de l'insert de coupe (12) dans le support (10) par appui contre une surface frontale (102) du bras de serrage (101) du support.

13. Outil selon l'une des revendications 1 à 12, caractérisé par le fait un canal d'agent réfrigérant (15) dans le bras de serrage.

14. Outil selon l'une des revendications 1 à 13, caractérisé par le fait que l'évidement en forme de fente (11) présente, dans une zone (111) adjacente à celle prévue pour le logement de l'insert de coupe (12), un évidement chantourné (112) dans lequel une clé à douille (13) dont la longueur est, en coupe transversale, plus grande que la largeur peut être introduite et, en tournant ladite clé, l'évidement en forme de fente (11) peut être écarté dans la zone du logement (111) de l'insert de coupe.

15. Outil selon la revendication 14, caractérisé par le fait que l'évidement chantourné (112) et la clé à douille (13) sont réalisés, en coupe transversale, de manière ovale ou elliptique.

16. Outil selon l'une des revendications 1 à 15, caractérisé par le fait que la précontrainte du bras de serrage (101) est réglable par l'intermédiaire d'une vis de serrage (14).
